# EUROPÄISCHE PATENTSCHRIFT

(11) **EP 1 160 548 B1**
(45) Veröffentlichungstag und Bekanntmachung des Hinweises auf die Patenterteilung: **02.11.2005**
(21) Anmeldenummer: 01201455.1
(22) Anmeldetag: 23.04.2001
(51) Int. Cl.: G01G 21/28

(54) **Waage mit schwenkbarem Bedienungspult**
Weighing scale with swivelling operating console
Balance avec pupitre de commande pivotant

(30) Priorität: 19.05.2000 DE 10024408
(43) Veröffentlichungstag der Anmeldung: 05.12.2001
(73) Patentinhaber: Mettler-Toledo GmbH, 8606 Greifensee (CH)
(72) Erfinder: Gietenbruch, Matthias, 8107 Buchs (CH); Leisinger, Roger, 8044 Zürich (CH); Schillig, Alfred, 8627 Grüningen (CH); Mattle, Bruno, 8340 Hinwil (CH)

(56) Entgegenhaltungen:
- DE-C- 4 233 395
- US-A- 4 601 355
- US-A- 4 979 579
- US-A- 5 729 480

## Beschreibung

Die Erfindung bezieht sich auf eine Waage nach dem Oberbegriff des Anspruches 1.

Eine solche Waage entspricht der nicht vorveröffentlichten deutschen Offenlegungsschrift DE-A-198 58 625, und der amerikanischen Patentschrift US-A-4 601 355.

Eine solche Waage hat, wie in dem genannten Stand der Technik beschrieben, zahlreiche Vorteile. Der vorliegenden Erfindung liegt nun die Aufgabe zugrunde, diesen Vorteilen weitere hinzuzufügen, und dies gelingt erfindungsgemäss durch die kennzeichnenden Merkmale des Anspruches 1.

Dabei wird die Tatsache ausgenützt, dass durch die nach dem Stand der Technik vorgesehene Schwenkbarkeit mit Spiel es ermöglicht, dem Bedienungspult zusätzlich eine grössere Beweglichkeit zu verleihen, die es besonders leicht ermöglicht, die Fläche seiner Oberseite um eine Querachse so zu schwenken, dass der jeweilige Betrachter - je nach seiner Grösse oder der Relativlage seiner Augen zu einer Unterlagsfläche, auf der die Waage steht - einen optimalen Blickwinkel auf die Bedienungselemente inklusive der Anzeige hat, die ja gegebenenfalls als sogenannter Touch-screen ebenfalls als Bedienungselement ausgestaltet sein kann.

Im Prinzip können für die Verschwenkbarkeit um die Querachse die verschiedensten Konstruktionen vorgesehen werden. Beispielsweise wäre es möglich, eine von einem kleinen Motor angetriebene, schwenkbare Spindel in einer Mutter laufen zu lassen. Bevorzugt ist es jedoch, wenn das Bedienungspult selbst eine Schwenkeinrichtung aufweist, mittels derer sich ein Teil des Bedienungspults um eine in dessen vorderem Bereich liegende Querachse verschwenken lässt. Da der schwenkbare Teil beim Bedienen der Waage muss belastet werden können, ist weiter eine Fixiereinrichtung zum wahlweisen Fixieren in wenigstens zwei Schwenklagen vorgesehen. Vorzugsweise ist ferner eine Belastungseinrichtung vorgesehen, welche eine Kraft auf den schwenkbaren Teil des Bedienungspults ausübt, so dass dieser in einer vorbestimmten Richtung um die Querachse vorbelastet ist.

Dabei kann die Fixiereinrichtung beispielsweise von einer Klemmschraube oder von einer Riegeleinrichtung gebildet sein, doch ist es günstiger, wenn die Fixiereinrichtung rastartig elastisch ausgebildet ist und mit mindestens einer Gegenrast des Bedienungspultes (4) in Eingriff bringbar ist, weil dann die Handhabung vereinfacht ist.

Eine derartige Beweglichkeit des Bedienungspultes relativ zum Waagengehäuse macht natürlich die elektrische Verbindung über ein Kabel zu letzterem schwierig. Dieses Problem wird gemäss einer Weiterbildung der Erfindung so gelöst, dass dem Kabel eine Anpasseinrichtung zum Anpassen der wirksamen Kabellänge zugeordnet ist.

Diese Anpasseinrichtung könnte eine unter der Wirkung einer Feder stehende Kabeltrommel sein, doch ist es bevorzugt, wenn die Anpasseinrichtung mindestens eine in einem Kabelgehäuse untergebrachte, wahlweise zu umschlingende Umlenkeinrichtung aufweist, denn eine solche Konstruktion ist weniger platzaufwendig.

Es ist vorteilhaft, wenn das Kabelgehäuse am Bedienungspult, insbesondere an dessen Unterseite, gegebenenfalls aber auch an dessen Seite, untergebracht ist, denn bei einer Unterbringung im Waagengehäuse müsste die Waage nach jedem Zugriff zum Kabelgehäuse allenfalls neu nivelliert werden.

Vorteilhafte Ausgestaltungen der Enfindung sind Gegenstand der abhängigen Ansprüche 2 bis 16.

Weitere Einzelheiten der Erfindung ergeben sich an Hand der nachfolgenden Beschreibung eines in der Zeichnung schematisch dargestellten, bevorzugten Ausführungsbeispieles. Es zeigen:
- Fig. 1: eine Perspektivansicht einer erfindungsgemässen Waage; von der die
- Fig. 2a) bis c): das Bedienungspult in einem Schnitt nahe der Linie III-III der Fig. 1 in drei unterschiedlichen Schwenklagen veranschaulichen;
- Fig. 3: einen Schnitt nach der Linie III-III der Fig. 1 durch die Mitte eines keilartigen Verstellmechanismus; und
- Fig. 4: eine Druntersicht unter das Bedienungspult im Sinne des Pfeiles IV der Fig. 1 mit offenem Kabelgehäuse.

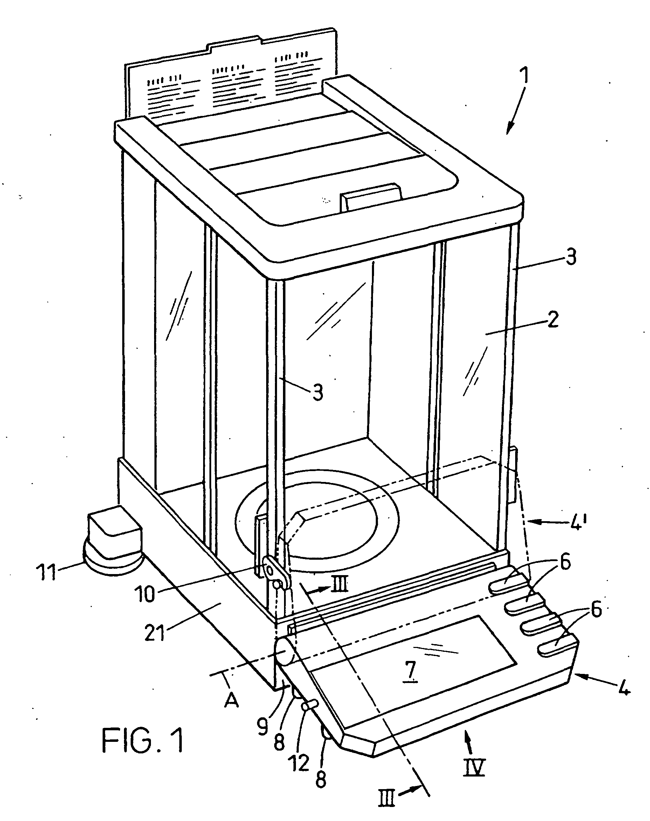

An Hand der Fig. 1 sollen nur jene Teile der Waage nach der älteren Patentanmeldung beschrieben werden, welche zum Verständnis der vorliegenden Erfindung erforderlich sein mögen.

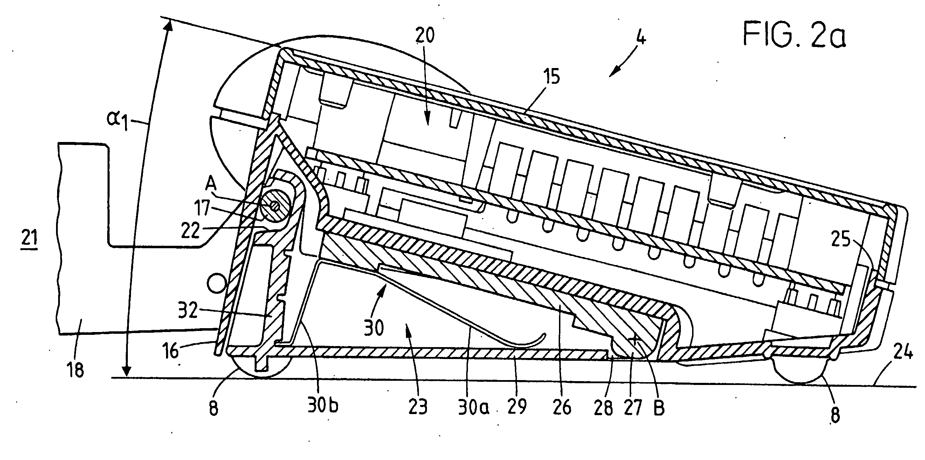

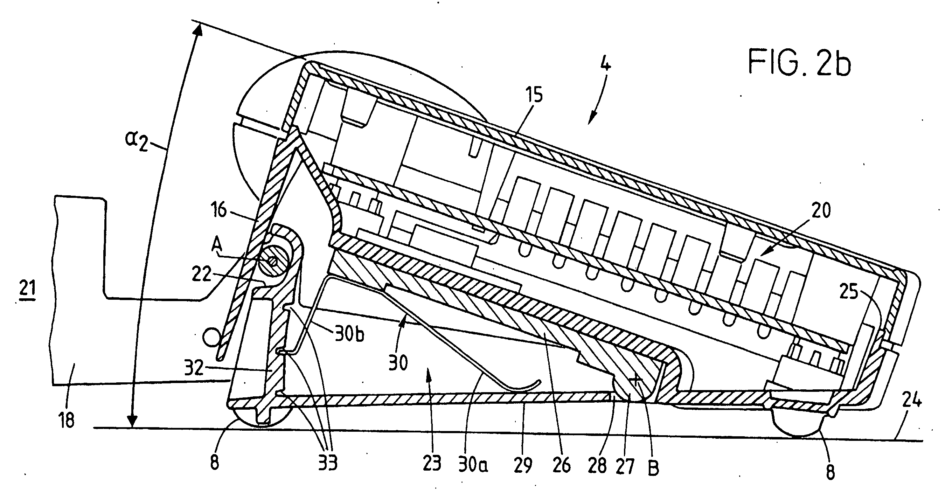

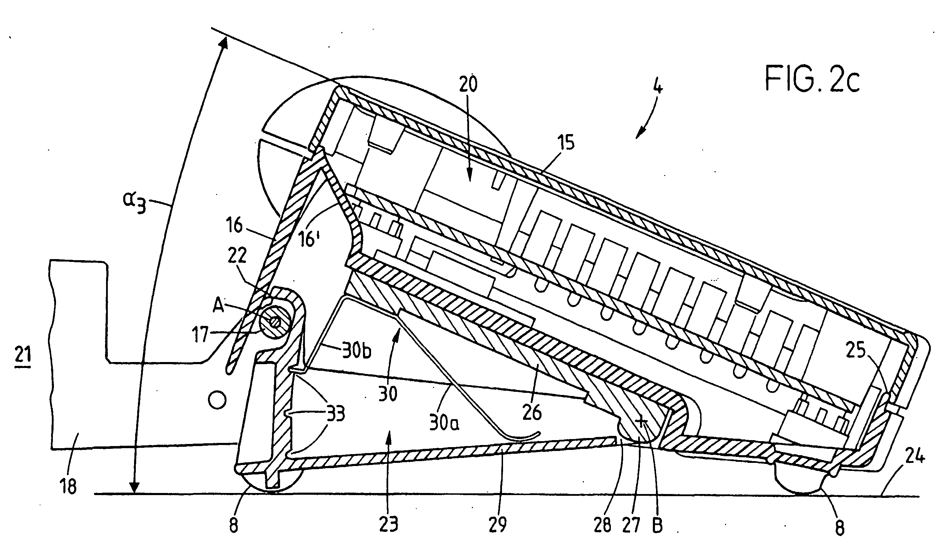

Das einen Windschutz 2 tragende Waagengehäuse 21 einer Waage 1 besitzt an der Rückseite wenigstens einen höhenverstellbaren Nivellierfuss 11 und ist an einer Frontplatte 9 mit einem Bedienungspult 4 verbunden. Dieses Bedienungspult 4 ist wenigstens annähernd um eine geometrische Schwenkachse A schwenkbar an der Frontplatte 9 angebracht. Daher ist es möglich, das Bedienungspult 4 aus der in Fig. 1 mit vollen Linien dargestellten Arbeitslage, in der es betriebsbereit ist, in eine hochgeklappte, strichpunktiert dargestellte Ruhelage 4' zu verschwenken, so dass sich die nach vorne auskragende Längsseite des Bedienungspultes 4 nach oben erstreckt. Dies hat mehrere Vorteile:
- soll die Waage an einen anderen Ort gebracht werden, kann man sie leichter tragen;
- das Bedienungspult verschmutzt in dieser Position weniger;
- an einem etwaigen Abstellplatz nimmt die Waage weniger Raum ein;
- die Unterlage unter dem Bedienungspult ist leicht zu reinigen;
Die lose Ankoppelung des Bedienungspults über zwei kleine, die Schwenkachse A bestimmende Achsstummel 17 (Fig. 2) hat zudem den weiteren Vorteil des erschwerten Wärmeüberganges von sich erwärmenden Teilen des Bedienungspultes 4 auf das Waagengehäuse 21.

Durch die Erfindung wird der weitere Vorteil einer anpassbaren Arbeitslage hinzugefügt.

Das Bedienungspult 4 weist im dargestellten Ausführungsbeispiel vier Drucktasten 6 sowie einen durch Berührung einzelner Bereiche zu Eingabezwecken der Betätigung und der Anzeige dienenden Bildschirm 7 auf. Die dargestellte Ausführungsform des Bedienungspultes 4 ist verhältnismässig einfach, doch kann ein solches Bedienungspult beträchtliche Ausmasse in seiner Längsausdehnung von der Frontplatte 9 weg annehmen. Um zu vermeiden, dass bei einer Druckbetätigung eines der Teile 6 oder 7 ein Kippmoment auf das Waagengehäuse 21 ausgeübt wird, sind zweckmässig Füsse 8 vorgesehen. Das Bedienungsterminal 4 steht dank der zumindest in vertikaler Richtung spielbehafteten Verbindung mit der Frontplatte 9 des Waagengehäuses 21 über die Schwenkachse A eigenständig und unabhängig von der Waage auf der Unterlage. Auch wenn bei Betätigung des Terminals Druck auf die Füsse ausgeübt wird und diese, z. B. als Folge ihrer Gummipufferung, leicht nachgeben, wird trotzdem keine Kraft auf das Waagengehäuse 21 übertragen.

Es wurde oben bereits gesagt, dass das Bedienungspult 4 aus der mit vollen Linien dargestellten Arbeitslage in die strich-punktierte Ruhelage 4' geschwenkt werden kann. Es ist vorteilhaft, wenn wenigstens einer dieser Lagen eine Arretiervorrichtung oder Rastvorrichtung zugeordnet ist, um den Verbleib in der jeweiligen Lage zu sichern. Im gezeigten Ausführungsbeispiel ist an einem Ständer 3 des Windschutzes 2 symbolisch eine Klinke 10 angeordnet, die in der Ruhelage 4' mit einem am Bedienungspult 4 vorstehenden Haltestift 12 zusammen die Fixierung in dieser Lage bewirkt. Es versteht sich, dass es sich hier bloss um ein Beispiel handelt und die Arretiereinrichtung jede an sich bekannte Form annehmen kann. Eine Verrastung oder Arretierung kann auch für die gezeigte Arbeitslage von Vorteil sein.

Gemäss Fig. 2 a) bis c) sind für die Schwenkbewegung dieses Bedienungspultes 4 um die Achse A zwei einander gegenüberliegende Achsstummel 17 (nur einer ist im Schnitt nahe der Linie III-III zu sehen) an vom Gehäuse vorragenden Lagerwangen bzw. Armen 18 als Armaturen einer ein Schwenkscharnier zur Verschwenkung um die Achse A bildenden Anordnung vorgesehen. Diese Achsstummel 17 liegen in einem länglichen, und damit Spiel nach oben und unten vorsehenden Lagerauge 22. Das Lagerauge 22 umgreift jedoch den jeweiligen Achsstummel 17 nur teilweise und ist gegen das in Fig. 2 nur durch das Bezugszeichen angedeutete Waagengehäuse 21 hin offen. Dadurch kann das Bedienungspult 4 leicht vom Waagengehäuse 21 getrennt werden, falls dies erwünscht ist.

Um jedoch zu verhindern, dass Schmutz von dieser Rückseite her ins Innere des Bedienungspultes gelangt, ist dieses als schachtelartiges Gehäuse ausgebildet, das eine die offene Seite des Lagerauges 22 abdeckende Abdeckwand 16 aufweist. Diese Abdeckwand 16 muss einerseits relativ dichtend an den Armaturen 17, 18, 22 anliegen, darf aber anderseits eine weiter unten beschriebene Verschwenkung um eine im vorderen Bereich des Bedienpults liegende Querachse B nicht behindern. Deshalb ist die Abdeckwand zweckmässig so geformt, dass bei Verschwenkung um die Querachse B der Abstand zum Lagerauge 22 und dem Achsstummel 17 etwa gleich bleibt. Die Abdeckwand könnte auch elastisch, z. B. von einem Federblech oder, wie dargestellt, von einem keilförmigen Kunststofflappen gebildet sein, der auf dem Lagerauge aufsteht, ohne jedoch das Spiel des Achsstummels 17 zu beeinträchtigen.

Die Abdeckwand 16 stellt in der dargestellten günstigen Ausgestaltung einen Schenkel einer etwa U-förmigen und die Armaturen 17, 18, 22, vorzugsweise mit Spiel, umgreifenden Wandanordnung 16, 16' am schwenkbaren Teil des Bedienungspultes 4 dar, was einerseits die Abdichtung verbessert, anderseits eine Führung für den mit ihr verbundenen schwenkbaren Teil bildet, wenn dieser aus der Stellung nach Fig. 2 a) in die Stellung nach Fig. 2 b) oder 2 c) gebracht wird.

In einer weiteren Ausführungsform können das Lagerauge 22 und/oder die Abdeckwand 16 und der Achsstummel 17 so ausgebildet sein, dass in Arbeitslage des Bedienungsterminals 4 - unabhängig von der Verschwenkung um die Querachse B - das vorgesehene Spiel gewährleistet ist, dass aber beim Hochschwenken des Bedienungsterminals 4 in die Ruhelage 4' ein Widerstand überwunden werden muss, der in der Ruhelage 4' wieder nachlässt, so dass das Terminal nur mit erneutem Kraftaufwand wieder aus der Ruhelage 4' in die Arbeitslage gebracht werden kann. Das heisst, Lagerauge, Achsstummel und Abdeckwand bilden eine Rastvorrichtung für die Verschwenkung des Bedienungspults 4 in die Ruhelage 4'. Dies lässt sich beispielsweise durch einen nockenbewehrten Achsstummel oder Formung des Achsstummels mit einem ellipsenartigen Querschnitt und eines teilweise federnden Lagerauges und/oder einer federnden Abdeckwand erreichen, so dass beim Verschwenken um die Achse A Rückwand und Lagerauge gegeneinander aufgeweitet werden und der Schwenkbewegung ein zu überwindendes Widerstandsmoment entgegensetzen und bei weiterem Verschwenken in der Ruhelage noch immer kraftschlüssig am Achsstummel anliegen, so dass das Terminal in der Ruhelage gehalten wird. Es versteht sich, dass auch andere konstruktive Gestaltungen dieser Art von Rasterung zum Ziele führen.

Das schachtelartige Gehäuse des Bedienungspultes 4 besteht aus einem oberen Gehäuse 20, mit einer oberen Abdeckung 15 und einem schachtelartig nach oben gezogenen Untersatz 23, der mit seinen Füssen 8 auf eine Unterlage 24 aufsetzbar ist und an seiner das obere Gehäuse 20 unterseitig abschliessenden Oberseite einen verschmälerten oberen Rand 25 aufweist, über den das obere Gehäuse 20 nach Art eines Schachteldeckels schiebbar ist.

Der Untersatz 23 ist weiter als keilartiger Verstellmechanismus ausgebildet, der im wesentlichen aus einem Trägerelement 26 und einer Bodenplatte 29 sowie einer Rastvorrichtung gebildet aus nutförmigen Gegenrasten 33 (Fig. 2b und 2c) und Feder 30b besteht. Das obere Gehäuse 20 ist relativ zur Bodenplatte 29 des Untersatzes 23 verschwenkbar, um die Abdeckung 15 mit den aus Fig. 1 ersichtlichen Bedienungs- bzw. Anzeigeelementen 6, 7 relativ zum Beschauer in eine günstige Arbeitslage zu bringen, beispielsweise um störende Spiegelungen von Lichtquellen zu vermeiden. Je nach der Schwenklage ergibt sich dabei im Falle des gezeigten Ausführungsbeispieles ein Winkel α₁, α₂ oder α₃. Zu diesem Zweck stützt sich das das obere Gehäuse 20 an seiner Unterfläche tragende Trägerelement 26 über einen daran befestigten, vorzugsweise aber einstückig angeformten, balligen Achskörper 27 in einer Öffnung oder Vertiefung 28 am Boden des Untersatzes 23 ab. Auf diese Weise ist der Zusammenbau von oberem Gehäuse 20 und Untersatz 23 besonders einfach. Dabei versteht es sich, dass an Stelle der durchgehenden Öffnung 28 in der Bodenplatte 29 des Untersatzes 23 auch eine blosse Ausnehmung der, im übrigen geschlossenen Bodenplatte 29 vorgesehen sein könnte. In jedem Falle ergibt sich eine im balligen Achskörper 27 gelegene Querachse zur Verschwenkung der Abdeckung 15 mit den Bedienungs- und Anzeigeelementen gegenüber der Unterlagsfläche 24. Dabei ist verständlich, dass dies nur ein (bevorzugtes) Beispiel für eine mögliche Schwenkkonstruktion ist, dass aber aus dem Gebiet der schwenkbaren Pulte oder dergleichen dem Fachmann genügend Alternativen zur Verfügung stehen.

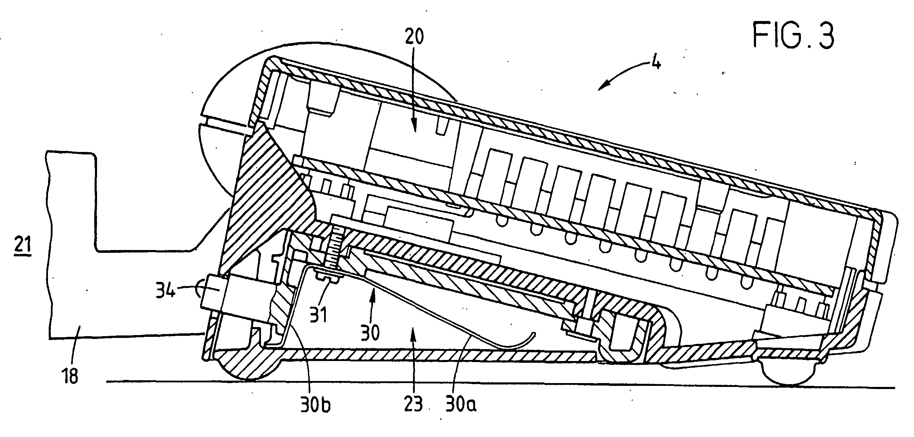

An der Unterseite des Trägerelements 26 ist eine Blattfeder 30 mittels mindestens einer Schraube 31 (Fig. 3) in ihrem Mittelbereich befestigt. Die Blattfeder 30 hat vorzugsweise zwei vom Mittelbereich abragende Schenkel 30a und 30b. Von diesen liegt der eine Schenkel 30a an der Bodenplatte 29 des Untersatzes 23 auf und belastet das obere Gehäuse 20 in Aufwärtsrichtung. Der andere Schenkel 30b der Feder 30 dient als Rast, die in als Gegenrast 33 dienende Nuten eingreift, welche in einer als Fortsetzung des Lagerauges 22 ausgebildeten Wand 32 als Vertiefungen ausgeformt sind. Es versteht sich, dass hier zwar die Rast und Gegenrast formschlüssig ineinander greifen, gegebenenfalls aber auch statt eines formschlüssigen Eingriffs ein kraftschlüssiger Eingriff eines federnden Elementes in eine seichte Vertiefung eines anderen möglich wäre, so dass die Rastverbindung durch Druck auf das obere Gehäuse 20 lösbar wäre. Dies ist aber deshalb nicht bevorzugt, weil dann bei zu starkem Druck auf eine der Tasten 6 (Fig. 1) die Gefahr bestünde, dass sich die Rast löst. Auch wäre es möglich, die Gegenrasten sägezahnförmig auszubilden, so dass die Bewegung des oberen Gehäuses 20 entgegen dem Drucke der Belastungseinrichtung 30b unter darüber Schleifen über die Schrägflächen der Sägezähne, in der anderen Richtung aber nur nach Lösen der Verrastung, z. B. in der im folgenden beschriebenen Weise mittels Druckknopf, möglich ist.

Es versteht sich ferner, dass an Stelle eines einzigen Federelementes 30 für beide, von den Schenkeln 30a, 30b ausgeübten Funktionen auch gesonderte Federelemente denkbar wären. Ferner könnte die vom Federschenkel 30a gebildete Belastungseinrichtung (es wären natürlich auch andere elastische Elemente, wie pneumatische Federn, Magnete oder dergleichen möglich) auch in der anderen Richtung, d.h. im Sinne einer Bewegung des oberen Gehäuses aus der Stellung nach Fig. 2 c) in die Stellung nach Fig. 2 a), möglich, doch ist auch hier die dargestellte Lösung bevorzugt.

Insbesondere wenn, wie dargestellt, eine formschlüssige Verrastung vorgesehen ist, so ist - ebenso wie bei einer unelastischen Verbindung - eine Betätigungseinrichtung zum Lösen der Verbindung für die jeweilige Stellung zweckmässig. Natürlich wäre es möglich, das obere Gehäuse 20 gegenüber der Bodenplatte 29 und der Wand 32 geringfügig nach vorn verschiebbar zu machen, so dass es in der jeweils hinteren Gebrauchslage mit dem Federschenkel 30b im Eingriff mit der Gegenrast 33 steht, in der vorderen Verstelllage aber ausser Eingriff kommt. Dies würde aber die Abdichtung des Gehäuses erschweren und die jeweilige Schwenklage etwas unsicher machen. Günstiger ist eine Betätigungseinrichtung mit einem Druckknopf 34, wie ihn Fig. 3 zeigt. Wie die Schnittlinie III-III der Fig. 1 veranschaulicht, ist dieser Druckknopf 34 an der Rückseite des Bedienungspults 4 in unmittelbarer Nähe des Eingriffs der Rastfeder 30b in die nutförmige Gegenrast 33 in der Wand 32 angebracht, doch ist natürlich die Unterbringung an einem anderen Orte durchaus möglich.

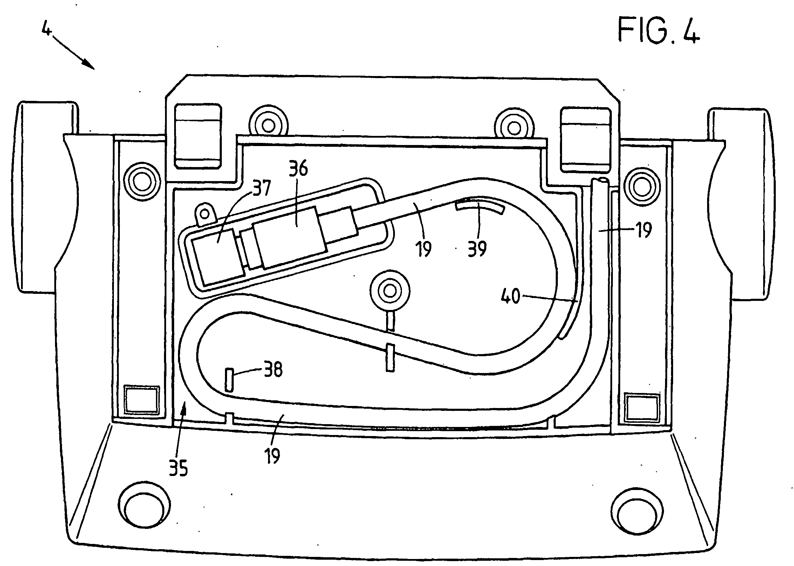

Es wurde oben bereits gesagt, dass die durch die Querachse B bewirkte erhöhte Beweglichkeit des Bedienungspultes 4 auch besondere Anforderungen hinsichtlich der elektrischen Verbindung zum Waagengehäuse 21 erfordert. Dies kann nach einer Weiterbildung der Erfindung so gelöst werden, dass dem Verbindungskabel 19 (Fig. 4) eine Anpasseinrichtung zum Anpassen der wirksamen Kabellänge zugeordnet ist. An sich könnte dieses Kabel im Waagengehäuse 21 selbst untergebracht sein, doch ist dies weniger günstig als eine Unterbringung in einem eigenen, im Boden des Bedienungspultes 4 angeordneten Kabelgehäuse 35, das in Fig. 4 offen gezeigt ist, vorteilhaft aber durch eine (nicht dargestellte) Platte in für solche Gehäuse an sich bekannter Weise abdeckbar ist.

Das Kabel 19 kann mit einem Stecker 36 in einer Steckbuchse 37 des Bedienungspultes 4 stecken und so lösbar sein. Zweckmässig ist aber zur Anpassung seiner Länge an die jeweilige Lage des Bedienungspultes 4 mindestens eine im Kabelgehäuse 35 untergebrachte, wahlweise zu umschlingende Umlenkeinrichtung 38, 39 und/oder 40 vorgesehen, so dass die nach aussen hin wirksame Länge des Kabels durch Umlenken desselben um die eine, die andere und/oder die dritte dieser Umlenkflächen 38-40 an die jeweiligen Erfordernisse anpassbar ist.

### Bezugszeichenliste

| | | | |
|---|---|---|---|
| 1 | Waage | 2 | Windschutz |
| 3 | Ständer | 4 | Bedienungspult |
| | | 6 | Drucktasten |
| 7 | Bildschirm | 8 | Füsse |
| 9 | Frontplatte | 10 | Klinke |
| 11 | Nivellierfuss | 12 | Haltestift |
| | | | |
| 15 | Abdeckung | 16 | Abdeckwand |
| 17 | Achsstummel | 18 | Lagerwangen, Arme |
| 19 | Kabel | 20 | oberes Gehäuse |
| 21 | Waagengehäuse | 22 | Lagerauge |
| 23 | Untersatz | 24 | Unterlage |
| 25 | verschmälerter oberer Rand | 26 | Trägerelement |
| 27 | balliger Achskörper | 28 | Vertiefung |
| 29 | Bodenplatte | 30 | Feder |
| 31 | Schraube | 32 | Wand |
| 33 | Gegenrasten | 34 | Druckknopf |
| 35 | Kabelgehäuse | 36 | Stecker |
| 37 | Steckbuchse | 38-40 | |

## Patentansprüche

1. Waage (1) mit einem Waagengehäuse (21) und einem Bedienungspult (4) als gegeneinander bewegliche Teile (4, 21), welches Bedienungspult (4) in einer Anordnung am Waagengehäuse (21) mit diesem durch am Bedienungspult (4) und am Waagengehäuse (21) vorhandene, ineinandergreifende Armaturen (17, 18, 22) scharnierartig verbunden ist und um eine im wesentlichen parallel zum Waagengehäuse (21) verlaufende Schwenkachse (A) von einer vom Waagengehäuse (21) vorragenden Arbeitslage in eine Ruhelage (4') verschwenkt werden kann, wobei die ineinandergreifenden Armaturen in mindestens einer radialen Richtung Spiel aufweisen und so eine Schwenkgelenkeinrichtung (17, 22) bilden, **dadurch gekennzeichnet, dass** das Bedienungspult (4) selbst eine Schwenkeinrichtung (26, 27, 28, 29) um eine im vorderen Bereich desselben gelegene Querachse (B) und eine zugehörige Fixiereinrichtung (30b, 33) zum wahlweisen Fixieren des schwenkbaren Teiles des Bedienungspultes (4) in mindestens zwei Schwenklagen aufweist.

2. Waage nach Anspruch 1, **dadurch gekennzeichnet, dass** die Schwenkeinrichtung (26...29) im wesentlichen aus einem Trägerelement (26) und einer Bodenplatte (29) besteht, die durch einen im Bereich der Querachse (B) am Trägerelement (26) vorragenden, in einer Vertiefung (28) der Bodenplatte (29) lagernden, balligen Körper (27) scharnierartig miteinander verbunden sind.

3. Waage nach Anspruch 1 oder 2, **dadurch gekennzeichnet, dass** das Bedienungspult aus einem oberen Gehäuse (20) und einem die Schwenkeinrichtung (26...29) und die Fixiereinrichtung (30b, 33) enthaltenden Untersatz (23) besteht und das obere Gehäuse (20) durch Verschwenkung des Untersatzes (23) um die Querachse (B) in verschiedene Arbeitslagen bringbar ist.

4. Waage nach Anspruch 3, **dadurch gekennzeichnet, dass** die Oberseite des Untersatzes (23) das obere Gehäuse (20) unterseitig abschliesst und von unten schachtelartig in eine obere Abdeckung (15) des oberen Gehäuses (20) eingreift.

5. Waage nach einem der vorhergehenden Ansprüche, **dadurch gekennzeichnet, dass** an der dem Waagengehäuse (21) zugewandten Seite des Bedienungspultes (4) von dem um die Querachse (B) schwenkbaren Teil des Bedienungspults (4) eine abwärts ragende, die Armaturen (17, 18, 22) des Bedienungspultes (4) abdeckende und mit dem schwenkbaren Teil des Bedienungspults (4) um die Querachse (B) mitschwenkende Abdeckwand (16) vorgesehen ist.

6. Waage nach Anspruch 5, **dadurch gekennzeichnet, dass** die Abdeckwand (16) einen Schenkel einer etwa U-förmigen und die Armaturen (17, 18, 22) vorzugsweise mit Spiel umgreifenden Wandanordnung (16, 16') am schwenkbaren Teil des Bedienungspults (4) bildet.

7. Waage nach einem der Ansprüche 5 oder 6, **dadurch gekennzeichnet, dass** die Armaturen (17, 18, 22) ein die Scharnierachse (A) teilweise umgreifendes, gegen die Abdeckwand (16) hin offenes Lagerauge (22) aufweisen.

8. Waage nach Anspruch 7, **dadurch gekennzeichnet, dass** die Armaturen durch entsprechende Formung so aufeinander abgestimmt sind, dass bei Verschwenkung des Bedienungspults in die Ruhelage ein Widerstandsmoment zu überwinden ist.

9. Waage nach einem der vorhergehenden Ansprüche, **dadurch gekennzeichnet, dass** die Schwenkeinrichtung (26...29) eine Belastungseinrichtung (30a) aufweist, welche den schwenkbaren Teil des Bedienungspults (4) in einer vorbestimmten Schwenkrichtung um die Querachse (B) vorbelastet.

10. Waage nach einem der vorhergehenden Ansprüche, **dadurch gekennzeichnet, dass** die Fixiereinrichtung (30b) rastartig elastisch ausgebildet ist und mit mindestens einer Gegenrast (33) des Bedienungspultes (4) in Eingriff bringbar ist.

11. Waage nach Anspruch 10, **dadurch gekennzeichnet, dass** die Belastungseinrichtung (30a) und die Fixiereinrichtung (30b) von einem einzigen Federelement (30) gebildet sind, welches in seinem Mittelbereich mit dem schwenkbaren Teil des Bedienungspults (4) verbunden ist und dessen einer Schenkel (30a) sich nach unten hin von oben auf der Bodenplatte (29) abstützt, wogegen der andere Schenkel (30b) als Rast ausgebildet ist.

12. Waage nach einem der Ansprüche 9 bis 11, **dadurch gekennzeichnet, dass** Rast (30b) und Gegenrast (33) für einen formschlüssigen Eingriff ineinander ausgebildet sind.

13. Waage nach einem der Ansprüche 9 bis 12, **dadurch gekennzeichnet, dass** die Fixiereinrichtung (30b, 33) eine Betätigungseinrichtung (34) zum Lösen der Fixierung, insbesondere einen gegen einen elastischen Teil (30b) der Fixiereinrichtung wirkenden Druckknopf (34), aufweist.

14. Waage nach einem der vorhergehenden Ansprüche, bei der das Bedienungspult (4) mit dem Waagengehäuse (21) über mindestens ein Kabel (19) verbunden ist, **dadurch gekennzeichnet, dass** dem Kabel (19) eine Anpasseinrichtung (38-40) zum Anpassen der wirksamen Kabellänge zugeordnet ist.

15. Waage nach Anspruch 14, **dadurch gekennzeichnet, dass** die Anpasseinrichtung mindestens eine in einem Kabelgehäuse (35) untergebrachte, wahlweise zu umschlingende Umlenkeinrichtung (38-40) aufweist.

16. Waage nach Anspruch 15, **dadurch gekennzeichnet, dass** das Kabelgehäuse (35) am Bedienungspult (4), insbesondere an dessen Unterseite, untergebracht ist.

## Claims

1. A balance (1) with a balance housing (21) and an operating console (4) formed as mutually movable parts (4, 21), wherein the operating console (4) is pivotally connected to the balance housing (21) by an arrangement having mutually engaging fittings (17, 18, 22) located on the balance housing (21) and on the operating console (4) and can be rotated about a tilt axis (A) being substantially parallel to the balance housing (21) from a working position projected forward from the balance housing (21) into a rest position (4'); the mutually engaging fittings (17, 18, 22) having loose play in at least one radial direction, thereby forming a pivoting hinge arrangement(17, 22), **characterized in that** the operating console (4) itself comprises a pivot arrangement (26, 27, 28, 29) about a transverse xis (B) that is located in an anterior portion of the operating console (4) and an associated locking device (30b, 33) to selectively lock the pivoting part of the operating console (4) in at least two pivoting positions.

2. The balance according to claim 1, **characterized in that** the pivoting arrangement (26, 27, 28, 29) essentially consists of a support element (26) and a bottom plate (29), that are pivotally connected to each other by a rounded fulcrum body (27) that protrudes from the support element (26) in the zone of the transverse axis (B) and is rotatably seated in a recess (28) of the floor plate (29).

3. The balance of claim 1 or 2, **characterized in that** the operating console (4) consists of a top housing (20) and a base part (23) comprising the pivoting arrangement (26, 27, 28, 29) and the locking device (30b, 33) and that the top housing (20) can be set at different working positions by rotating the base part (23) in relation to the top housing (20) about the transverse axis (B).

4. The balance according to claim 3, **characterized in that** the top side of the base part (23) encloses the top housing (20) from below and is engaged with a top cover (15) of the top housing (20) in a box-like manner from below.

5. The balance according to one of the preceding claims, **characterized in that** at the side of the operating console (4) facing the balance housing (21) a cover wall (16) is foreseen, which extends downwards from the pivoting part of the operating console (4), is rotatable about the transverse axis (B), covers the fittings (17, 18, 22) of the operating console (4), and is jointly rotatable with the pivoting part of the operating console (4).

6. The balance according to claim 5, **characterized in that** the cover wall (16) forms a leg of an approximately U-shaped wall arrangement (16, 16') at the pivoting part of the operating console (4), that encloses the fittings (17, 18, 22) preferentially with loose play.

7. The balance according to claim 5 or 6, **characterized in that** the fittings (17, 18, 22) comprise a fulcrum hole (22) surrounding the tilt axis (A) partially and being open against the cover wall (16).

8. The balance according to claim 7, **characterized in that** the fittings (17, 18, 22) are adapted to each other by corresponding designs so that an opposing torque has to be overcome when rotating the operating console into the rest position.

9. The balance according to one of the preceding claims, **characterized in that** the pivoting arrangement (26, 27, 28, 29) comprises a force-biasing element (30a) exerting a biasing force to the pivoting part of the operating console (4) in a predetermined tilt direction relative to the transverse axis (B).

10. The balance according to one of the preceding claims, **characterized in that** locking device (30b) is formed as an elastically biased detent device and can be engaged with at least one counter detent device (33) located at the operating console (4).

11. The balance according to claim 10, **characterized in that** the force-biasing element (30a) and the locking device (30b) are formed out of a single spring element (30) that is attached to the pivoting part of the operating console (4) at its a mid-portion; said single spring element comprising a first leg (30a) that supports itself downwards from above on the bottom plate (29), and a second leg (30b) that constitutes the detent device.

12. The balance according to one of claims 9 to 11, **characterized in that** the detent device (30b) and the at least one counter detent device (33) are designed to engage in a form-locking manner with each other.

13. The balance according to one of claims 9 to 12, **characterized in that** the locking device (30b, 33) comprises an actuator device (34) for releasing the fixation, preferably a push button (34) arranged to act against an elastic part (30b) of the locking device.

14. The balance according to one of the preceding claims, wherein at least one cable (19) connects the operating console (4) with the balance housing (21), **characterized in that** a length-adapting device (38, 39, 40), which adapts the effective cable length to requirements, is attributed to the cable (19).

15. The balance according to claim 14, **characterized in that** the length-adapting device comprises at least one cable guiding device (38, 39, 40) arranged in a cable housing (35) that is selectively looped by the cable(19).

16. The balance according to claim 15, **characterized in that** the cable housing (35) is arranged at the operating console (4), preferably at its bottom side.

## Revendications

1. Balance (1) comprenant un carter de balance (21) et un pupitre de commande (4) comme parties (4, 21) réciproquement mobiles, lequel pupitre de commande (4) est relié à la façon d'une charnière dans un agencement sur le carter de balance (21) à celui-ci par des accessoires (17, 18, 22) présents sur le pupitre de commande (4) et sur le carter de balance (21) et s'engageant les uns dans les autres et peut être basculé autour d'un axe de pivotement (A) agencé sensiblement parallèlement au carter de balance (21) d'une position de travail dépassant du carter de balance (21) à une position de repos (4'), les accessoires s'engageant les uns dans les autres présentant du jeu dans au moins une direction radiale et formant ainsi un dispositif d'articulation pivotante (17, 22), **caractérisée en ce que** le pupitre de commande (4) même présente un dispositif de pivotement (26, 27, 28, 29) autour d'un axe transversal (B) situé dans la zone avant de ce pupitre et un dispositif de fixation (30b, 33) spécifique pour la fixation en option de la partie pivotante du pupitre de commande (4) dans au moins deux positions de basculement.

2. Balance selon la revendication 1, **caractérisée en ce que** le dispositif de pivotement (26...29) est composé essentiellement d'un élément support (26) et d'une plaque de fond (29), qui sont reliés entre eux à la façon d'une charnière par un corps (27) bombé, logeant dans une cavité (28) de la plaque de fond (29) et dépassant dans la zone de l'axe transversal (B) sur l'élément support (26).

3. Balance selon la revendication 1 ou 2, **caractérisée en ce que** le pupitre de commande se compose d'un boîtier (20) supérieur et d'un socle (23) contenant le dispositif de pivotement (26...29) et le dispositif de fixation (30b, 33) et le boîtier (20) supérieur peut être amené dans différentes positions de travail par basculement du socle (23) autour de l'axe transversal (B).

4. Balance selon la revendication 3, **caractérisée en ce que** le côté supérieur du socle (23) ferme côté inférieur le boîtier (20) supérieur et s'engage par le bas à la façon d'une boîte dans un cache (15) supérieur du boîtier (20) supérieur.

5. Balance selon l'une quelconque des revendications précédentes, **caractérisée en ce que** sur le côté, tourné vers le carter de balance (21), du pupitre de commande (4) de la partie, pouvant pivoter autour de l'axe transversal (B), du pupitre de commande (4), il est prévu une paroi de recouvrement (16) dépassant vers le bas, cachant les accessoires (17, 18, 22) du pupitre de commande (4) et pouvant basculer en même temps que la partie pivotante du pupitre de commande (4) autour de l'axe transversal (B).

6. Balance selon la revendication 5, **caractérisée en ce que** la paroi de recouvrement (16) forme une branche d'un dispositif de paroi (16, 16') à peu près en forme de U et entourant les accessoires (17, 18, 22) de préférence avec du jeu sur la partie basculante du pupitre de commande (4).

7. Balance selon l'une quelconque des revendications 5 ou 6, **caractérisée en ce que** les accessoires (17, 18, 22) présentent une tête de palier (22) entourant partiellement l'axe de charnière (A) et ouverte en direction de la paroi de recouvrement (16).

8. Balance selon la revendication 7, **caractérisée en que** les accessoires sont adaptés les uns aux autres avec une forme appropriée de telle sorte que, lors du basculement du pupitre de commande dans la position de repos, on doit vaincre un couple de résistance.

9. Balance selon les revendications précédentes, **caractérisée en ce que** le dispositif de pivotement (26...29) présente un dispositif de chargement (30a) qui précontraint la partie pivotante du pupitre de commande (4) dans un sens de basculement prédéfini autour de l'axe transversal (B).

10. Balance selon l'une des revendications précédentes, **caractérisée en ce que** le système de fixation (30b) est conçu de façon élastique et à encliquetage et peut être amené en prise avec au moins un contre-encliquetage (33) du pupitre de commande (4).

11. Balance selon la revendication 10, **caractérisée en que** le système de chargement (30a) et le système de fixation (30b) sont formés d'un seul élément de ressort (30), qui est relié dans sa zone centrale à la partie pivotante du pupitre de commande (4) et dont une branche (30a) s'appuie en direction du bas par le haut sur la plaque de fond (29), alors que l'autre branche (30b) est conçue comme un encliquetage.

12. Balance selon l'une des revendications 9 à 11, **caractérisée en ce que** l'encliquetage (30b) et le contre-encliquetage (33) sont conçus pour un engagement réciproque par complémentarité de forme.

13. Balance selon l'une des revendications 9 à 12, **caractérisée en ce que** le système de fixation (30b, 33) présente un système d'actionnement (34) pour le détachement de la fixation, en particulier un bouton pression (34) agissant contre une partie (30b) élastique du système de fixation.

14. Balance selon l'une des revendications précédentes, sur laquelle le pupitre de commande (4) est relié au carter de balance (21) au moyen d'au moins un câble (19), **caractérisée en ce que** qu'un dispositif de renvoi (38 - 40) pour l'adaptation de la longueur de câble efficace est attribué au câble (19).

15. Balance selon la revendication 14, **caractérisé en ce que** le dispositif d'adaptation présente au moins un dispositif de renvoi (38 - 40) logé dans un boîtier de câble (35) et à enrouler le cas échéant.

16. Balance selon la revendication 15, **caractérisée en ce que** le boîtier de câble (35) est disposé sur le pupitre de commande (4), en particulier sur son côté inférieur.
